# EUROPÄISCHE PATENTANMELDUNG

(11) **EP 3 324 350 A1**
(43) Veröffentlichungstag der Anmeldung: **23.05.2018**
(21) Anmeldenummer: 17203839.0
(22) Anmeldetag: 08.06.2010
(51) Int. Cl.: G06Q 10/08, G01C 21/36, G01C 21/34

(54) **NAVIGATIONSSYSTEM FÜR OPTIMIERTE LIEFER ODER ABHOLFAHRTEN**

(62) Teilanmeldung aus: 10165227.9
(71) Anmelder: Deutsche Post AG, 53113 Bonn (DE)
(72) Erfinder: Paul, Boris, 53115 Bonn (DE); Wild, Verena, 53129 Bonn (DE); Schulte-Hillen, Thomas, 53177 Bonn (DE); Ulrich, Keith, 53227 Bonn-Oberkassel (DE)
(74) Vertreter: Jostarndt Patentanwalts-AG

(57) **Zusammenfassung**

Die Erfindung bezieht sich auf ein Navigationssystem (4) mit Anzeigebildschirm (41) für Navigationsangaben umfassend eine Straßenkarte, ein Satellitenbild oder ein Bild aus der Vogelperspektive von der Umgebung um eine Zieladresse (Z1, Z2, Z3) herum, wobei in den Anzeigebildschirm des Navigationssystem ein Eingabemittel (43) für die Eingabe von mindestens einer Zusatzinformation (ZU1, ZU-2, ZU-3) zu mindestens einem Adressendatensatz integriert ist, wobei das Navigationssystem kabellos mit einem Computersystem (2) mit einer Datenbank (21) zur Speicherung und zur Bereitstellung (B) der Adressendatensätze für das Navigationssystem verbunden ist und das Computersystem (2) zur Einfügung (E) der Zusatzinformationen (ZU1, ZU-2, ZU-3) in die gespeicherten Adressendatensätze geeignet ist, wobei nach Eingabe von Adressdaten einer der Zieladressen (Z1, Z2, Z3) und nachfolgender Anzeige der Umgebung der zu diesen Adressdaten zugehörigen Zieladresse (Z1) mit einem Cursor (M1) ein Auswahlbereich (M) um die Zieladresse (Z1) herum auf dem Anzeigebildschirm (4) markiert werden kann, in dem markierten Bereich alle weiteren Zieladressen (Z2, Z3) dargestellt werden und mittels eines Cursors (M2) für die dargestellten Zieladressen (Z1, Z2, Z3) einen gemeinsamen Anfahrtspunkt auf dem Anzeigebildschirm (4) markiert werden kann, wobei allen Zieladressen (Z1, Z2, Z3) im markierten Bereich (M) die Geokoordinate des Anfahrpunkts (5) zugewiesen und die Geokoordinate des gemeinsamen Anfahrtspunktes (5) als Zusatzinformation in die Adressendatensätze der betreffenden Zieladressen (Z1, Z2) eingefügt wird.

## Beschreibung

### Gebiet der Erfindung

Die Erfindung betrifft ein Navigationssystem, mit dem auch Bereiche eines Gebiets zugänglich gemacht werden, die auf dem ursprünglichen Straßennetz des Navigationssystems nicht verfügbar waren.

### Hintergrund der Erfindung

Kurierdienste zum Liefern oder Abholen von Waren verwenden Abhol- oder Lieferadressen, um die Kurierfahrten mit mehreren Fahrtzielen möglichst optimal, d.h. mit möglichst wenig Zeitaufwand oder Materialaufwand zu planen. Das Dokument US7647231 offenbart ein System zur Zustellung von Postsendungen, wo die Stoppreihenfolge des Transports zu den Adressaten und anderen Empfängern gewechselt sowie die Adresse dieser während des Transports flexibel geändert werden kann. Die Zustellfahrt passt sich entsprechend der vorgenommenen Änderungen an. All diese Systeme leiden teilweise unter einem Adressendatensatz, der unvollständig, ungenau oder fehlerhaft sein kann. So weicht die Position einer Adresse (Hausnummer) für Navigationssysteme, die auf den Adressen zugeordneten Geokoordinaten basieren, in manchen Fällen bis zu 100 m von der tatsächlichen Position dieser Adresse ab. In anderen Fällen werden mehrere Hausnummern in einer Straße auf einen gemeinsamen Punkt (gemeinsame Geokoordinate) abgebildet, was das Auffinden der tatsächlichen Position einer dieser Hausnummern erschwert. Für manche Straßen liegen manchmal auch keine Geokoordinaten für einzelne Hausnummern für das Navigationssystem vor. Stattdessen werden die Adressen der betreffenden Straßen auf den Straßenmittelpunkt abgebildet, der in manchen Fällen mehr als 100 m von der tatsächlichen Zieladresse entfernt liegt. Fehlleitungen bei der Auslieferung und/oder Abholung von Postsendungen mittels eines Navigationssystems aufgrund fehlerhafter, ungenauer oder unvollständiger Daten führen zu erheblichen Zeitverlusten bei der Abholung bzw. Lieferung von Waren an Kundenadressen, insbesondere bei Kurierfahrten mit einer Vielzahl in Reihe anzufahrender Ziele.

### Zusammenfassung der Erfindung

Es ist daher eine Aufgabe der Erfindung, ein Navigationssystem bereitzustellen, mit dem auch Bereiche eines Gebiets zugänglich gemacht werden, die auf dem ursprünglichen Straßennetz des Navigationssystems nicht verfügbar waren.

Diese Aufgabe wird gelöst durch Navigationssystem mit Anzeigebildschirm für Navigationsangaben umfassend eine Straßenkarte, ein Satellitenbild oder ein Bild aus der Vogelperspektive von der Umgebung um eine Zieladresse herum, wobei in den Anzeigebildschirm des Navigationssystem ein Eingabemittel für die Eingabe von mindestens einer Zusatzinformation zu mindestens einem Adressendatensatz integriert ist, wobei das Navigationssystem kabellos mit einem Computersystem mit einer Datenbank zur Speicherung und zur Bereitstellung der Adressendatensätze für das Navigationssystem verbunden ist und das Computersystem zur Einfügung der Zusatzinformationen in die gespeicherten Adressendatensätze geeignet ist, wobei nach Eingabe von Adressdaten einer der Zieladressen und nachfolgender Anzeige der Umgebung der zu diesen Adressdaten zugehörigen Zieladresse mit einem Cursor ein Auswahlbereich um die Zieladresse herum auf dem Anzeigebildschirm markiert werden kann, in dem markierten Bereich alle weiteren Zieladressen dargestellt werden und mittels eines Cursors für die dargestellten Zieladressen ein gemeinsamer Anfahrtspunkt auf dem Anzeigebildschirm markiert werden kann, wobei allen Zieladressen im markierten Bereich die Geokoordinate des Anfahrpunkts zugewiesen und die Geokoordinate des gemeinsamen Anfahrtspunktes als Zusatzinformation in die Adressendatensätze der betreffenden Zieladressen eingefügt wird, damit dieser Anfahrtspunkt nun für spätere Kurierfahrten zu diesen Zieladressen im Anzeigebildschirm als Anfahrtsziel angegeben wird.

Die Adressendatensätze umfassen zumindest eine oder mehrere Adressendaten zu einer bestimmten Adresse, wie Name der Person/Firma, Straßennamen, Hausnummer, Postleitzahl und/oder Ort sowie die zu dieser so definierten Position dazugehörigen Geokoordinaten, anhand der das Navigationssystem den Fahrer des Kurierfahrzeugs zu der Zieladresse leiten soll. Das im Kurierfahrzeug ablesbare Navigationssystem bezeichnet die Notwendigkeit, die Navigationsangaben, die das Navigationssystem dem Fahrer macht, im Kurierfahrzeug auf einem geeigneten Anzeigebildschirm abzulesen zu können. Hierbei können die Navigationsangaben bevorzugt eine Straßenkarte, ein Satellitenbild oder ein Bild in Vogelperspektive von der Umgebung um eine Zieladresse mit Fahrangaben (z.B. als überlagerter Leitpfeil) umfassen. Die Karten oder Luftbilder können mittels einer Windrose gedreht werden, so dass je nach Wahl der Oberteil der Karte oder des Bildes Norden / Westen / Süden / Osten darstellt. Auch können die Karten- oder Bildausschnitte vergrößert oder verkleinert werden und/oder mittels eines Cursors und bei einem sogenannten Touch-Screen als Anzeigebildschirm mittels eines Fingers verschoben werden. Straßenkarten in Kombination mit Luftbildern (Satelliten - oder Vogelperspektive), vorzugsweise hin-und-her-schaltbar, geben dem Fahrer einen weit besseren Eindruck von den örtlichen Gegebenheiten um eine Zieladresse herum als beispielsweise nur die Darstellung eines Leitpfeils zur Straßennavigation ohne weitere Umgebungsangaben. Im Sinne einer hohen Akzeptanz bei den Kurierdiensten und Kurierfahrern ist die intuitive Bedienung des Systems wichtig, deshalb wird die Verwendung von Karten oder Satellitenbildern mit einfacher Mausbedienung bevorzugt. Die Navigationsangaben können auch eine Kombination aus verschiedenen Angaben, beispielsweise mit zusätzlichen Richtungs- und Entfernungsangaben sein. Zusätzlich können Sprachangaben aus dem System die Navigation weiter unterstützen. Das Navigationssystem kann dabei in einer Ausführungsform selber im Kurierfahrzeug angeordnet und mittels der bekannten kabellosen Verbindungswege mit dem Computersystem verbunden sein, beispielsweise mittels einer Mobilfunkverbindung oder einer Wireless-LAN-Verbindung. Das Navigationssystem kann hierbei entweder die Adressendatensätze selbstständig in Zielkoordination umwandeln oder aber die für eine Zielführung benötigten Zieldaten von dem Computersystem bereitgestellt bekommen. In einer alternativen Ausführungsform kann das Navigationssystem zentral auf Computersystem installiert sein und die Navigationsangaben für den Fahrer wie voranstehend beschrieben kabellos auf einen Anzeigebildschirm übermitteln. Zu beiden Zwecken kann im Computersystem eine Navigationssoftware installiert sein, beispielsweise Infoware Mapsuite Server 3.0 zur Bereitstellung von Geocoder-Daten, Karten, Luftbilder und/oder einem Routingservice. Das Computersystem kann jedes für die Speicherung und Änderung der Adressendatensätze geeignetes Computersystem sein, beispielsweise ein Server-basiertes Computersystem. Das Einfügen der Zusatzinformation kann beispielsweise direkt über editierbare Adressendatensätze im Computersystem erfolgen. Dazu muss das Computersystem die Adressendatensätze dem Fahrer oder einer anderen Person, die zur Eingabe von Zusatzinformation befugt ist, in einer zumindest teilweise editierbaren Form zur Verfügung stellen. Alternativ könnte Computersystem auch eine separate Komponente als Einfügungsmittel umfassen, beispielsweise eine dort installierte zur Einfügung von Daten in Datensätze geeignete Software, die die Adressendatensätze bei verfügbarer Zusatzinformation in der Form abändert, dass diese Zusatzinformation zu den Adressendatensätzen so hinzugefügt wird, dass diese Zusatzinformation bei einer späteren Bereitstellung desselben Adressendatensatzes zusammen mit den vorher bereits vorhandenen Informationen bereitgestellt wird. Dies hätte den Vorteil, dass die Zusatzinformation in einem geeigneten Datenformat zu den Adressendatensätzen hinzugefügt wird und so fehlerhafte Dateneingaben der Fahrer entdeckt und ggf. korrigiert oder nicht hinzugefügt werden könnten. Die Bereitstellung erfolgt vorzugsweise aktiv über den Anzeigebildschirm des Navigationssystems im Kurierfahrzeug, kann aber auch passiv über eine zugreifbare Adresse im Computersystem erfolgen. Im letzteren Fall müssten sich die Nutzer des Systems die Adressendatensätze vom Computersystem abrufen.

Das Eingabesystem der vorliegenden Erfindung für die Eingabe von Zusatzinformationen zu den vorhandenen Adressendatensätzen ermöglicht es, dass das System einerseits Erfahrungswerte von Fahrern bei der Lieferung bzw. Abholung von Lieferobjekten an bestimmten Adressen sammelt und andererseits für eine verbesserte Kurierdienstleistung zu einem späteren Zeitpunkt anderen Kurierfahrern anhand der geänderten oder erweiterten Adressendatensätze zur Verfügung stellen kann. Hierbei kann die Zusatzinformation vom Fahrer des Kurierfahrzeugs selber oder von einer beliebigen anderen befugten Person in das System eingegeben werden. Dazu kann das Eingabesystem in einer Ausführungsform im Kurierfahrzeug installiert sein. In einer anderen Ausführungsform umfasst das System Eingabesysteme außerhalb der Kurierfahrzeuge zur Eingabe der Zusatzinformation. Ein Beispiel einer solchen befugten Person, die nicht der Fahrer des Kurierfahrzeugs ist, wäre der Disponent für den Kurierauftrag, der von Fahrer des Kurierfahrzeugs über dessen Erfahrungswerte telefonisch informiert wird und diese Erfahrungswerte dann in das System einträgt. In einer alternativen Ausführungsform können die Erfahrungswerte auch an eine oder mehrere dafür zuständige Erfassungspersonen übermittelt und von dieser als Zusatzinformation ins System eingetragen werden. Beispielsweise kann die Zusatzinformation aus einem vom Fahrer definierten günstigen Anfahrpunkt (und dessen Geokoordinaten) bestehen, wenn die Positionsangabe der Zieladresse gemäß Navigationssystem von der tatsächlichen Position dieser Adresse abweicht. Diese Erfahrungswerte können nur lokal von den Fahrern der Kurierfahrzeuge gewonnen werden. Andere Erfahrungswerte von Fahrern können hierbei Informationen über die Zugänglichkeit einer Liefer-/Abholadresse von einer bestimmten Gebäudeseite oder bezüglich bestimmter Kurierfahrzeuge sein, z.B. "LKW-Zugang nur von der Gebäudevorderseite, kleiner Wagen oder Fahrräder haben Zugang auch von der Hinterseite". Andere Erfahrungswerte können sich beispielsweise auf die Verfügbarkeit von Personal zur Annahme oder Ausgabe von Lieferobjekten beziehen, z.B. "Wenn der Pförtner nicht am Haupttor ist, kann das Lieferobjekt auch am Nebeneingang abgegeben werden". Erfahrungswerte können sich auch auf mögliche geschickte Kombinationen von Lieferadressen beziehen, z.B. "Es können die Adressen A, B und C von gemeinsamen Anfahrpunkt X bedient werden, da ein gemeinsamer Hauseingang / Durchgang existiert". Die obigen Beispiele sind hier nur exemplarisch genannt. Jeder auch andersartige Erfahrungswert eines Kurierfahrers (z.B. Öffnungszeiten etc.) kann eine wertvolle Zusatzinformation darstellen, deren Verfügbarkeit zusammen mit der Adressinformation als Adressendatensatz die weiteren Kurierfahrten zu der bestimmten Adresse effektiver und erfolgreicher macht. Diese Feedback-Möglichkeit für Kurierfahrer ermöglicht eine Optimierung von Abhol- und/oder Lieferfahrten, bei dem das volle Effizienzpotential durch die Erfahrungswerte der Fahrer, die in das System als Zusatzinformationen einfließen, ausgeschöpft wird.

Ferner schafft die Möglichkeit zur Eingabe von Zusatzinformationen durch die Fahrer eine große Akzeptanz der Fahrer bei der effektiven Anwendung dieses Systems. Die verbesserte Datengrundlage in den Adressendatensätzen gestaltet den Kurierdienst auf längere Zeit deutlich effizienter. Das Eingabesystem kann jede geeignete Form von Eingabemitteln umfassen. In einer einfachen Form könnte ein Eingabemittel beispielsweise ein zu betätigender Knopf sein, der bei erreichtem Anfahrtspunkt zu einer Lieferadresse gedrückt wird und dem System die augenblicklichen Geokoordinaten übermittelt, die dann mit dem Einfügungsmittel zu den Adressendatensätzen hinzugefügt werden. Der so registrierte Anfahrpunkt wird als günstigster Anfahrpunkt für die zugeordnete Adresse den weiteren Kurierfahrern bei erneuter Anfahrt dieser Adresse angeboten. In anderen Ausführungsformen kann das Einfügungsmittel beispielsweise auch eine Computertastatur mit Kontrollmonitor darstellen.

In einer Ausführungsform ist das Computersystem ein Web-basiertes Computersystem. Ein Web-basiertes Computersystem bezeichnet hier Computersysteme, dessen Programme (Webanwendung oder Webapplikation) auf einem Webserver ausgeführt werden, wobei eine Interaktion mit dem Benutzer über einen Webbrowser erfolgen kann. Hierzu ist das Zugangsgerät des Benutzers (Client) und das Computersystem des Dienstanbieters (Server) über ein Netzwerk wie das Internet oder über ein Intranet miteinander verbunden, so dass die räumliche Entfernung zwischen Client und Server unerheblich ist. Der Benutzer startet eine Webanwendung, indem er z.B. in einem Browser die URL des Webservers eingibt und damit die erste Anfrage (HTTP-Request) sendet. Der Webserver nimmt diese Anfrage entgegen und übergibt sie an ein Programm. Dieses generiert oder lädt daraufhin den HTML-Quellcode einer Webseite, welche vom Webserver zurück an den Browser des Benutzers geschickt wird (HTTP-Response). Diese Webseite ist die grafische Benutzeroberfläche der Webanwendung. Webanwendungen setzen nicht zwingend die Benutzung eines Browsers voraus. Anfragen können auch von anderen Programmen durchgeführt werden, die den Response des Webservers verarbeiten, z.B. das Betreiben eines erfindungsgemäßen Navigationssystems im Kurierfahrzeug.

Der Vorteil von Webanwendungen ist, dass für den Benutzer nur der Zugang zu einem Webbrowser vorauszusetzen ist, welcher auf den meisten Computersystemen schon vorhanden ist. Im Gegensatz zu herkömmlichen Client-Server-Anwendungen ist also keine weitere Installation von Software auf den Computern der Benutzer notwendig, wenn man von Browser-Plug-Ins wie Flash absieht. Dadurch erreichen Webanwendungen einen hohen Grad an Plattformunabhängigkeit, sofern bei der Entwicklung darauf geachtet wurde, dass alle Browser unterstützt werden. Muss die Logik einer Webanwendung geändert werden, sind Änderungen nur an einer (zentralen) Stelle, nämlich auf dem Webserver, notwendig, was sich günstig auf die Wartungskosten auswirkt. Durch die immer weitergehende Verbreitung von Browsern auf andere Endgeräte, wie Mobiltelefone oder PDAs, finden Webanwendungen schnell eine Verbreitung jenseits der klassischen Softwareumgebungen. Als serverseitige Infrastruktur können beispielsweise die folgenden Anwendungen / Programme verwendet werden: Java 1.5, Apache Tomcat ab 5.5.x, SOAP Webservices mit Apache Axis2/Java Version 1.4, SOAP 1.1 (http Protocol Binding ohne Attachments), WSDL 1.1 (SOAP Binding), infoware mapsuite Server 3.0 (Geocoder-Server, Mapserver für Karten und Luftbilder, Routingserver), infoware MapAPI 1.0, infoware Redaktionssystem (JSP, Java) oder ODARS-Tools. Als Datenbank kann beispielsweise eine SQL-Datenbank (wie z.B. Postgres) verwendet werden. Der Fachmann kann neben den voranstehend angeführten Anwendungen / Programmen auch andere Infrastrukturlösungen im Rahmen der vorliegenden Erfindung wählen.

In einer Ausführungsform eines Web-basierten Computersystems umfasst das Computersystem einen oder mehrere Server, geeignet zum Zugriff von einer Vielzahl an unterschiedlichen Nutzern, wobei das Computersystem eine Rechteverwaltung umfasst, die abhängig von den Rechten des Nutzers dem Nutzer nur bestimmte Adressendatensätze zur Verfügung stellt. Diese Rechteverwaltung verteilt bzw. verwaltet Zugriffsrechte der Nutzer, die definieren, welche Teile des Computersystems für den Nutzer zugänglich sind und welche für ihn speziell gesperrt sind. Zugriffsrechte bezeichnen in der EDV die Regeln der administrativen Zugriffskontrolle (Rechteverwaltung), nach denen entschieden wird, ob und wie Benutzer Programme oder Programmteile, Operationen auf Objekten (z. B. Netzwerke, Datensysteme) ausführen dürfen. Diese Zugriffsrechte können zwischen unterschiedlichen Nutzern variieren. Die Zugriffsrechte können nach Eingabe eines Nutzernamens und eines Passwortes gemäß einer im Computersystem hinterlegten Tabelle für die jeweiligen Nutzer gewährt werden.

Eine Möglichkeit, Zugriffsrechte sehr flexibel zu gestalten, sind Zugriffs-Kontrolllisten, die für jeden Benutzer (Benutzerrolle) oder jede Gruppe angeben, welche Zugriffe erlaubt sind und welche nicht. Manche Programmiersprachen haben auch ein eigenes, vom Betriebssystem unabhängiges Sicherheitssystem, das in die Laufzeitumgebung integriert ist. Beispiele hierfür sind die Sicherheitskonzepte von Java und .NET. Dabei sind die Zugriffsrechte zumeist nicht vom Benutzer abhängig, sondern davon, inwieweit eine bestimmte Programmbibliothek als vertrauenswürdig angesehen wird. Für die Beurteilung der Sicherheit von Computersystemen werden die Sicherheitssysteme zur Verwaltung von Zugriffsrechten in zwei Klassen eingeteilt:
- Discretionary Access Control: Zugriff wird aufgrund der Identität des Akteurs (Benutzers) gewährt oder verweigert.
- Mandatory Access Control bzw. Multilaterale Sicherheitsmodelle: hier wird der Zugriff aufgrund allgemeiner Regeln und Eigenschaften gewährt oder verweigert.

Modell und Verwaltung der Zugriffsrechte ist ein wichtiger Bestandteil sicherer Computersysteme und daher Kriterium der Zertifizierung gemäß den gängigen Sicherheitsstandards wie TCSEC und ITSEC.

In einer bevorzugten Ausführungsform ist die Rechteverwaltung geeignet, dem Nutzer die Eingabe von Zusatzinformationen zu den bestimmten Adressensätzen zu erlauben oder zu verwehren. Eine solche Beschränkung der Eingabemöglichkeit kann die Dateneinheitlichkeit der Adressendatensätze gewährleisten und ggf. verhindern, dass unerfahrene Benutzer des Systems eventuell relevante Zusatzinformationen abändern oder löschen.

In einer weiteren Ausführungsform umfasst das Eingabesystem ein Eingabemittel mit mindestens einem editierbaren Feld zur Eingabe der Zusatzinformationen. Der Begriff "editierbar" bezeichnet hier die Möglichkeit, Daten mit oder in einem Eingabefenster oder mit einem anderen Anwendungsprogramm einzugeben und/oder zu ändern. Das Eingabefenster ist dabei auch geeignet, die ursprünglichen, eingegebenen oder geänderten Daten zu betrachten. Dadurch können Zusatzinformationen beispielsweise als Freitext einfach eingegeben und deren korrekte Eingabe im Eingabefenster von Eingebenden überwacht werden. Das Eingabemittel kann separat zum Anzeigebildschirm des Navigationssystems angeordnet sein. In einer vorteilhaften Ausführungsform ist das Eingabemittel in den Anzeigebildschirm des Navigationssystems integriert. Hierbei kann das Eingabemittel in einem separaten Fenster oder Bereich des Anzeigebildschirms angeordnet sein. In einer vorteilhaften Ausführungsform ist das Eingabemittel semitransparent den Navigationsangaben im Anzeigebildschirm überlagert. Dadurch wird der Fahrer bei der Eingabe der Zusatzinformation nicht gezwungen, seine Blickrichtung für die Eingabe zu ändern. Außerdem zwingt die Überlagerung den Fahrer, sich auf die Eingabe zu konzentrieren, da er nicht durch parallele Navigationsangaben abgelenkt wird.

In einer vorteilhaften Ausführungsform umfasst die Zusatzinformation des Weiteren mindestens ein Element der Gruppe Synonyme und Abkürzungen der Empfänger, Verfügbarkeitszeiten, Zusatzangaben bzw. Hinweise für folgende Kurierfahrten, Änderungen des Anfahrpunktes, Anfahrtsinformationen, Kurierkennung oder Datumsangaben zu einer Adresse. Je breiter die Datenbasis der Adressendatensätze ist, desto optimaler kann der Fahrer des Kurierfahrzeugs den Anfahrpunkt zu einer bestimmten Adresse anfahren.

In einer weiteren Ausführungsform umfasst das Navigationssystem ein Anzeigeelement im Kurierfahrzeug zur Anzeige der Adressendatensätze inklusive der Zusatzinformationen. Damit wird die Funktionalität des Navigationsgerätes mit vorhandenem Bildschirm zur Wiedergabe der Navigationsangaben zugleich für die Darstellung der Zusatzinformation der Adressendatensätze benutzt und ein Zusatzgerät zur Darstellung der Zusatzinformation vermieden. Die Geokoordinaten der Liefer- bzw. Abholadresse in den Adressendatensätzen kann direkt vom Navigationssystem in eine Fahrtroute umgesetzt werden. Die Zusatzinformationen müssen aber angezeigt werden, da sie im Falle von Textinformationen für den Fahrer von diesem gelesen werden müssen. In einer vorteilhaften Ausführungsform ist das Anzeigeelement in den Anzeigebildschirm des Navigationssystems integriert und somit für den Fahrer während der Kurierfahrt ständig sichtbar und gut zu lesen. Diese Integration in den Anzeigebildschirm kann als separates Fenster oder als überlagertes Fenster realisiert werden. In einer vorteilhafteren Ausführungsform ist das Anzeigeelement semitransparent den Navigationsangaben im Anzeigebildschirm überlagert. Damit wird die Handhabung, insbesondere das Lesen der Zusatzinformation, für den Fahrer noch weiter erleichtert. In einer alternativen Ausführungsform können die Zusatzangaben vollständig oder teilweise mittels eines Lautsprechers im Anzeigebildschirm des Navigationsgeräts auch als Sprachangaben dem Fahrer zur Verfügung gestellt werden.

In einer weiteren Ausführungsform ist das Navigationssystem ein in einem Kurierfahrzeug ablesbares Navigationssystem. Kurierfahrzeuge können Fahrzeuge aller Art sein, üblicherweise Transporter oder Trucks. In alternativen Ausführungsformen können die Kurierfahrzeuge auch Fahrräder sein. Die Lieferobjekte, die mit den Abhol- oder Lieferfahrten transportiert werden, können Objekte aller Art sein, beispielsweise Pakete, Briefe, Behälter oder andere Objekte.

In einer weiteren Ausführungsform umfassen die Navigationsangaben Sprachangaben.

In einer weiteren Ausführungsform wandelt das Navigationssystem die Adressdatensätze selbständig in Zielkoordinaten um.

In einer weiteren Ausführungsform ist das Eingabemittel in einem separaten Fenster oder Bereich des Anzeigebildschirms angeordnet.

### Kurze Beschreibung der Abbildungen

Diese und andere Aspekte der Erfindung werden im Detail in den Figuren wie folgt gezeigt:
- Fig. 1:: eine Ausführungsform mit erfindungsgemäßem Navigationssystem,
- Fig. 2:: eine Ausführungsform der Eingabe von Zusatzinformationen,
- Fig. 3:: eine weitere Ausführungsform der Eingabe von Zusatzinformationen,
- Fig. 4:: eine weitere Ausführungsform der Eingabe von Zusatzinformationen,
- Fig. 5:: eine Ausführungsform der Anzeige von Zusatzinformationen,
- Fig. 6:: ein schematischer Systemüberblick über ein System mit Computersystem.

### Detaillierte Beschreibung der Ausführungsformen

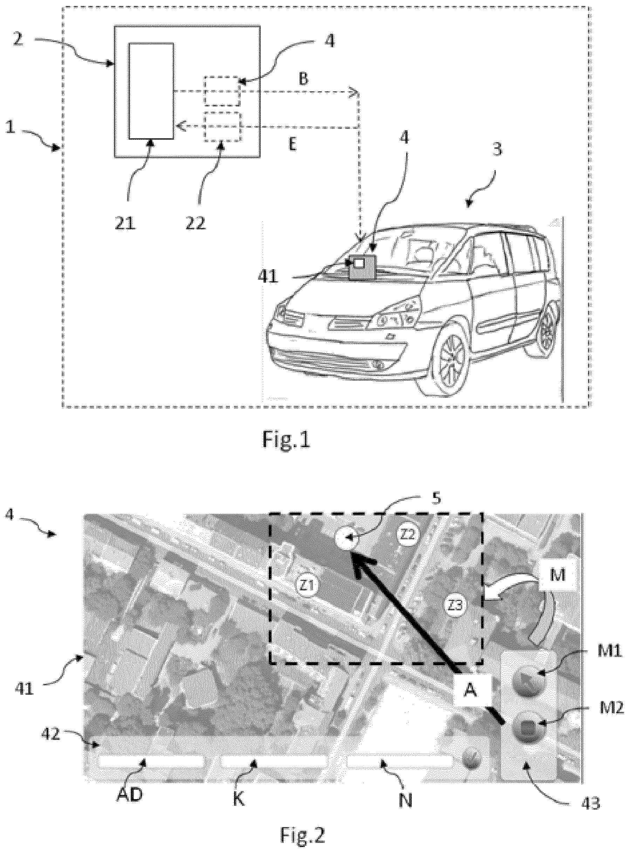

Figur 1 zeigt eine Ausführungsform des Systems 1 zur Optimierung von Abholfahrten und/oder Lieferfahrten eines Kurierdienstes, umfassend ein Computersystem 2 mit einer Datenbank 21, z.B. eine SQL-DB Datenbank, zur Speicherung von Adressendatensätzen und zur Bereitstellung B der Adressendatensätze (schematisch dargestellt als gestrichelter Pfeil in Richtung des Kurierfahrzeugs) für ein in mindestens einem der Kurierfahrzeuge 3 des Kurierdienstes zumindest ablesbares Navigationssystem 4 mit Anzeigebildschirm 41 für Navigationsangaben, das ein Eingabesystem 42 für die Eingabe von mindestens einer Zusatzinformation zu mindestens einem Adressendatensatz umfasst. Hierbei kann das Navigationssystem 4 im Kurierfahrzeug 3 selber oder alternativ im Computersystem 2 (angedeutet durch das gestrichelte Kästchen mit Bezugszeichen 4) installiert sein. Im ersten Fall werden die Adressendatensätze zum Navigationssystem 4 im Kurierfahrzeug drahtlos übertragen und dort zu einer Fahrtroute verarbeitet. Im letzteren Fall werden die Fahrtroute und die Zusatzangaben drahtlos vom Computersystem 2 auf den Anzeigebildschirm 41 im Kurierfahrzeug 3 übertragen und damit bereitgestellt B. Weiterhin wird die im Kurierfahrzeug 3 eingegebene Zusatzinformation an das Computersystem 2 übertragen und in die gespeicherten Adressendatensätze eingefügt E. Die Einfügung E (schematisch dargestellt als gestrichelter Pfeil in Richtung des Computersystems) kann einerseits direkt vom Fahrer des Kurierfahrzeugs in editierbaren Adressendatensätze erfolgen oder mittels einer zusätzlichen Komponente (gestrichelt dargestellte Einfügungsmittel 22) in die gespeicherten Adressendatensätze eingefügt werden, wobei diese Komponente hier als Beispiel im Computersystem 2 angeordnet ist. Das in Figur 1 dargestellte Kurierfahrzeug 3 ist nur ein Beispiel für ein Kurierfahrzeug. Das erfindungsgemäße Navigationssystem kann für Kurierfahrzeuge aller Art, z.B. auch Fahrräder, verwendet werden.

Ein mögliches Format der Adressendatensätze ist in der Tabelle 1 gezeigt. Hier besteht jeder Adressendatensatz beispielsweise aus Straßennamen (Str.), Hausnummer (HsNr), Postleitzahl (PLZ), Ort, Datum der letzten Bearbeitung des Adressendatensatzes, Angaben über das Vorhandensein (ja/nein) von Zeitfenstern (z.B. bzgl. der Verfügbarkeit von Adressaten) und anderer Zusatzinformationen (Bemerkungen ja/nein). Bevorzugt sind diese Adressendatensätze mit einer Verwaltungssoftware aufruf- und darstellbar. Die Adressen können dabei in einer alphabetischen Reihenfolge sortiert dargestellt werden. Die Sortierung kann in der Verwaltungssoftware mittels Mausklick geändert werden. In anderen Ausführungsformen können die Adressendatensätze auch andere oder zusätzliche Angaben enthalten, beispielsweise Firmennamen bei Geschäftsadressen, Telefonnummern, FAX-Nummern etc.

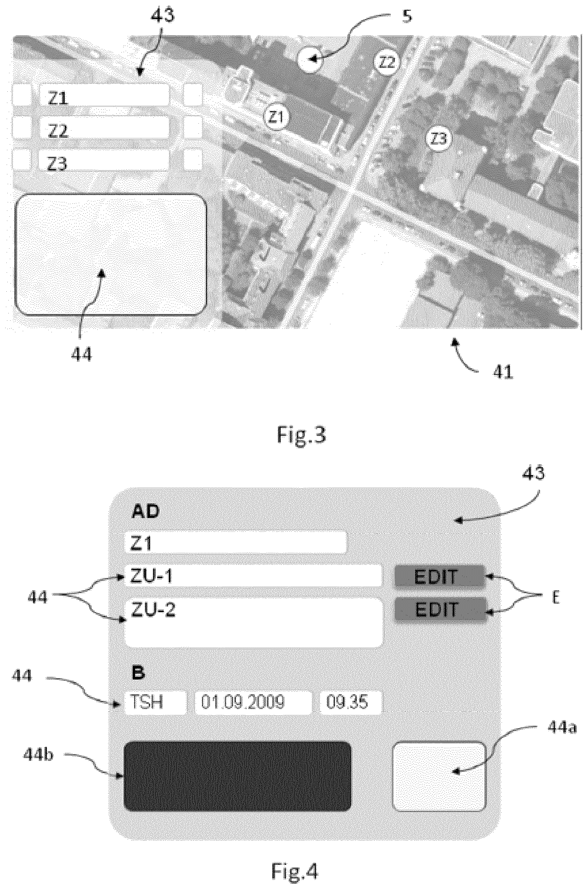

Figuren 2 und 3 zeigen Ausführungsformen eines Anzeigebildschirms 41 des Navigationsgeräts 4, wo ein Straßenausschnitt als Satellitenbild (Satellitenansicht) als Navigationsangabe gezeigt wird. Das Eingabesystem 42 ist hier überlagernd und teilweise semitransparent im Anzeigebildschirm 41 des Navigationssystems 4 angeordnet. Durch die Eingabe beispielsweise einer Adresse AD, eines Kundennamens K oder einer Auftragsnummer N wird ein entsprechendes Gebiet um die Zieladresse Z1, die den eingegebenen Adressendaten entspricht, angezeigt. Bei einer Eingabe von Adressendaten, zu denen mehrere Adressendatensätze existieren (z.B. nicht eindeutige Adresse oder nicht eindeutiger Name), kann das System die zu den Angaben gefundenen Adressen in einer Liste für eine entsprechende Auswahl der gewünschten Adresse anbieten. In einer weiteren Ausführungsform kann das System eine erweiterte Suche beispielsweise nach einer Zieladresse mittels Eingabefelder wie Postleitzahl, Straße, Ort, Name (Firma, privat) oder dem Vornamen beispielsweise der zu beliefernden Person anbieten. Es können für die erweiterte Suche auch andere oder zusätzliche Suchdetails verwendet werden. In einer bevorzugten Ausführungsform kann die erweiterte Suche mit einer Synonymdatenbank verknüpft sein. Die Synonymdatenbank enthält alternative Schreibweisen oder häufige Tippfehler. Durch die erzeugte Verknüpfung kann die Suche nach einer Zieladresse trotz ungenauer oder falscher Angaben in der erweiterten Suche schnell gefunden werden. In einer weiteren bevorzugten Ausführungsform erkennt die erweiterte Suche für Zieladressen Abkürzungen der Adressen / Personen an. Dies bedeutet, dass eine Zieladresse zu Adressenangaben / Personenangaben auch dann gefunden wird, wenn beispielsweise neben der Postleitzahl einzig die in den Suchdetails eingetragene Namenabkürzung angegeben wird. Nach der Anzeige der Umgebung zu der Zieladresse Z1 kann, wie in Figur 2 dargestellt, mit einem Cursor M1 ein Auswahlbereich M um die Zieladresse herum markiert werden. Ein Cursor (oder Einfügemarke, Schreibmarke, Eingabemarkierung) markiert eine Stelle auf einem Bildschirm, an oder zu der Eingaben eingefügt werden sollen. Dieser Cursor wird oft als kleiner Pfeil dargestellt. Auch der Mauszeiger auf dem Desktop, welcher mit einem Zeigegerät bewegt und genutzt wird, trägt die Bezeichnung Cursor. Bei Touchscreens ist der Cursor oft nicht sichtbar. Der Druckpunkt des Fingers oder Zeigestifts wird dann als Cursorfokus bezeichnet. In dem markierten Bereich kann das erfindungsgemäße Navigationssystem in einer Ausführungsform alle weiteren Zieladressen Z2, Z3 darstellen, zu denen entweder Adressendatensätze existieren und/oder die vom Fahrer bei dieser Fahrt noch zu bearbeiten sind. Die nicht benötigten Adressen können in einer Ausführungsform in der Karte oder in einer anderen Ausführungsform in einer Liste durch einen Klick demarkiert / entfernt werden, wie beispielsweise in Figur 3 dargestellt. Nachdem Zieladresse Z3 demarkiert wurde, können die verbleibenden Zieladressen Z1, Z2 bzgl. Zusatzinformationen in einem editierbaren Feld 44 (Figur 3) oder über einen definierte Geokoordinate (Anfahrtspunkt 5, siehe Figuren 2 und 3) bearbeitet werden. Bei beispielsweise zwei benachbarten Zieladressen kann der Fahrer nun einen gemeinsamen Anfahrtspunkt 5 für diese beiden Adressen mittels eines Cursors M2 markieren (schematisch durch den dicken schwarzen Pfeil A in Figur 2 dargestellt). Für spätere Kurierfahrten zu einer oder beiden dieser Adressen wird das System den Kurierfahrern als Anfahrtspunkt nun den definierten Anfahrtspunkt 5 angeben. Um eine perspektivische Verzeichnung bei der Festlegung des Anfahrpunktes 5 zu vermeiden, ist es vorteilhaft, auf eine Kartendarstellung oder ein Satellitenbild als Navigationsangabe umzustellen. Ist dagegen eine verbesserte räumliche Darstellung für die Eingabe der Zusatzinformation benötigt, ist es vorteilhaft, auf die perspektivische Ansicht (Vogelperspektive) umzuschalten. Nachdem der Anfahrtspunkt 5 definiert ist, werden allen Zieladressen Z1, Z2 im markierten Bereich M der Geokoordinate des Anfahrtspunktes 5 zugewiesen. Die Geokoordinate des gemeinsamen Anfahrtspunktes 5 wird als Zusatzinformation in die Adressendatensätze der betreffenden Zieladressen Z1, Z2 eingefügt. Somit können auch Bereiche eines Gebiets dem Navigationssystem 4 zugänglich gemacht werden, die auf dem ursprünglichen Straßennetz des Navigationssystems 4 nicht verfügbar waren.

Figur 4 zeigt eine weitere Ausführungsform des Eingabemittels 43 im Anzeigebildschirm 41 (hier nicht dargestellt). Im Eingabemittel 43 kann eine Zieladresse in einem entsprechenden Anzeigefeld AD eingegeben werden. Zu dieser Adresse mit vorhandenem Adressendatensatz können beispielsweise Zusatzinformationen ZU-1, ZU-2 in editierbaren Feldern 44 eingegeben werden. Hierbei müssen die Zusatzinformationen nicht auf zwei Zusatzinformationen zahlenmäßig begrenzt sein. Es können beispielsweise auch beliebig viele Zusatzinformationen über diese Felder 44 sukzessive eingegeben werden. In dieser Ausführungsform muss zur Eingabe von Zusatzinformationen ZU-1, ZU-2 ein Editiert-Feld E ("EDIT") vor der Eingabe betätigt werden. Diese zweiteilige Bedienung dient z.B. der Datensicherheit, so dass nicht versehentlich und ungewollt eine Zusatzinformation in einem Feld beschrieben, überschrieben oder geändert wird. Beispielsweise kann die eingebende Person ihre Eingabe in einem Bedienerfeld B mittels Personenkürzel (hier z.B. TSH), Datum und Uhrzeit für eine spätere Nachverfolgung quittieren. Die Angabe von Datum und Uhrzeit kann bei der Anzeige der Zusatzinformationen ZU-1, ZU-2 auch als Indikator der Aktualität der Zusatzinformationen ZU-1, ZU-2 dienen. Zusatzinformationen mit einem weit zurückliegenden Eintragungsdatum sind ggf. mit Vorsicht zu genießen, z.B. Zusatzinformationen über Öffnungszeiten etc. Die Eingabe der Zusatzinformationen ZU-1, ZU-2 selber wird nach erfolgter Eingabe in das Eingabemittel 43 vor Übermittlung an das Computersystem mit einem Feld 44a im Falle korrekter Eingaben quittiert oder mit einem Feld 44b im Falle fehlerhafter / unnützer Eingaben verworfen.

Zur Eingabe von Daten (z.B. Adressendaten, Zusatzinformation) kann entweder eine Tastatur, beispielsweise integriert in den Anzeigebildschirm 41, verwendet oder im Anzeigebildschirm 41 ein sogenanntes Touch-Screen-Feld mit Buchstaben zur Eingabe von Textinformation dargestellt werden. Als Touch-Screen wird ein Bildschirm oder ein Feld auf einem Bildschirm bezeichnet, bei dem durch Berührung, beispielsweise mit einem Finger, eine Eingabe oder Bedienung für ein Programm geleistet werden kann.

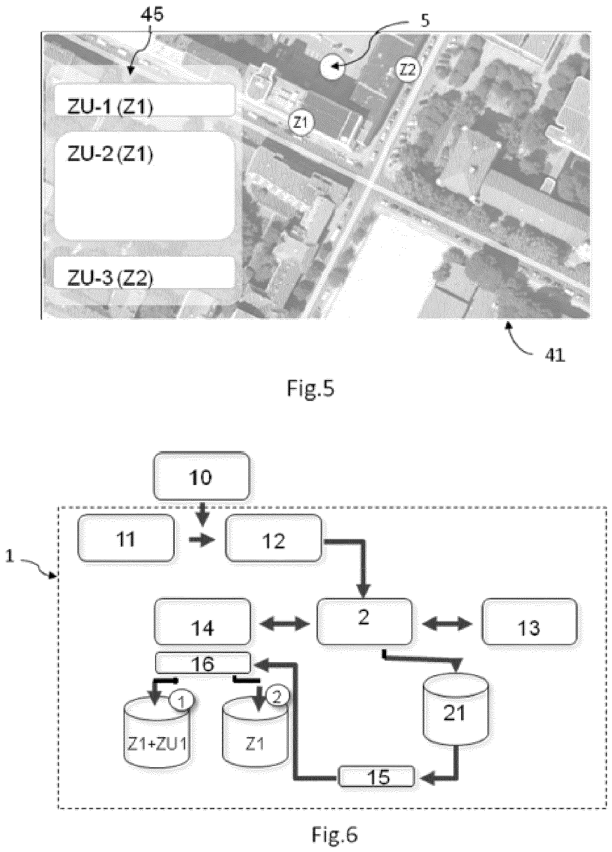

In Figur 5 wird eine Ausführungsform eines Anzeigeelements 45 für Adressendatensätze und/oder Zusatzinformationen ZU-1, ZU-2, ZU-3 gezeigt. Das Anzeigeelement 45 ist hier überlagernd und teilweise semitransparent im Anzeigebildschirm 41 des Navigationssystems 4 angeordnet. Es werden in den Navigationsangaben der gemeinsame Anfahrtspunkt 5 für die Zieladressen Z1, Z2 sowie die zu diesen Zieladressen verfügbaren Zusatzinformationen ZU-1 (zu Z1), ZU-2 (zu Z1) und ZU-3 (zu Z2) angezeigt. Zusatzinformationen zu Zieladressen sind beispielsweise Hinweise wie "Klingel für Z1 ist hinter einem Rosenbusch versteckt", "Z1 ist vor 10 Uhr nicht erreichbar", "Z1 ist erst nach 11 Uhr erreichbar", "Anfahrt mit LKWs über 5 Tonnen nur von der Rückseite", oder "Pakete für Herrn Mustermann bei Familie Müller rechts nebenan abgeben". Zeitangaben über die Verfügbarkeit bestimmter Zieladressen Z1, Z2 können zur Verbesserung der Routenplanung des Kurierdienstes verwendet werden. Hierfür kann das Eingabemittel 43 in den Figuren 2 - 4 spezielle Zeitfenster zur Eingabe von Zeitinformation ZU-1, ZU-2 umfassen. Solche extra bezeichneten Zeitfenster können damit auch maschinell von einer geeigneten Software in die Routenplanung des Kurierdienstes aufgenommen werden. Andere Zusatzinformationen wie gemeinsame Anfahrtspunkte sind bereits über die definierte Angabe von Anfahrtspunkten 5 und deren Darstellung als Anfahrtsziel im Anzeigebildschirm 41 des Navigationsgeräts 4 verfügbar.

Figur 6 zeigt einen schematischen Systemüberblick über ein System 1 mit dem Computersystem 2. Ein Nutzer 10 greift hier auf das System 1 als Web-basiertes System zu. Nachdem sich der Nutzer in ein entsprechendes Portal des Systems 1 (Zugangsportal) mittels Benutzername und Passwort eingeloggt hat, kann er eine Zieladresse in das System eingeben. Das System 1 kann dabei mandantenfähig sein, d.h. das System gewährleistet eine Trennung der Adressendatensätze je nach Nutzer (Benutzerverwaltung). Jeder Nutzer kann nur seine eigenen Adressendatensätze einsehen. Eine Zieladresse wird über ein entsprechendes Menü 11 gewählt und ggf. mit einem Menü 12 bearbeitet. Hier können ggf. Zusatzinformationen zu einer Adressenangabe eingegeben werden. Mit der nun definierten Zieladresse wird das hier Web-basiert Computersystem 2 gestartet. Hierbei kann das System ggf. über eine Schnittstelle auf extern gespeicherte Anwendungen 13 zur Ausführung des Systems zurückgreifen. Das System greift auf die in einer Datenbank 21 gespeicherten Adressendatensätze zu (ggf. werden ergänzend Geokoordinaten über einen Geocoder 14 besorgt) und stellt diese über eine Exportschnittstelle 15 und entsprechend geeigneten Anzeigemitteln 16 (z.B. der Anzeigebildschirm 41) dem Nutzer zur Verfügung: (1) Zieladresse mit Zusatzinformation, oder (2) Zieladresse ohne Zusatzinformation. Nutzerseitig werden für die Nutzung des Systems 1 z.B. ein Browser (z.B. IExplorer oder FireFox) und eine SOAP-Schnittstelle benötigt. Diese Schnittstellen werden für universelle Nutzbarkeit nach dem SOAP-Standard ausgeführt. Die Funktionen des Systems 1 lassen sich so modular auch einzeln verwenden. SOAP-Schnittstellen lassen sich mit vielen Programmiersprachen komfortabel verwenden. Als serverseitige Infrastruktur für das System können beispielsweise die folgenden Anwendungen / Programme verwendet werden: Java 1.5, Apache Tomcat ab 5.5.x, SOAP-Webservices mit Apache Axis2/Java Version 1.4, SOAP 1.1 (http Protocol Binding ohne Attachments), WSDL 1.1 (SOAP-Binding), infoware mapsuite Server 3.0 (Geocoder-Server, Mapserver für Karten und Luftbilder, Routingserver), infoware MapAPI 1.0, infoware Redaktionssystem (JSP, Java) oder ODARS-Tools . Als Datenbank kann beispielsweise eine SQL-Datenbank (wie z.B. Postgres) verwendet werden. Der Benutzer kann das System durch ein Logout wieder verlassen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

**Tabelle 1:**

| Str. | HsNr. | PLZ | Ort | Datum letzte Bearbeitung | Zeitfenster (Ja/Nein) | Bemerkung (Ja/Nein) |
|---|---|---|---|---|---|---|
| Wrangelstr. | 100 | 10234 | Berlin | 01.09.2009 | Ja | Ja |
| Meierstr. | 4 | 10999 | Berlin | 23.04.2009 | Nein | Ja |
| Adamstr. | 345 | 10345 | Berlin | 01.01.2008 | Nein | Nein |

### Liste der Bezugszeichen

- 1: System
- 10: Nutzer
- 11-16: Komponenten des Systems
- 2: Computersystem
- 21: Datenbank
- 22: Einfügungsmittel
- 3: Kurierfahrzeug
- 4: Navigationssystem
- 41: Anzeigebildschirm für Navigationsangaben
- 42: Eingabesystem für Zusatzinformationen
- 43: Eingabemittel
- 44: editierbares Feld im Eingabemittel
- 44a: Quittierung der Eingabe
- 44b: Zurücksetzen der Eingabe
- 45: Anzeigeelement für Adressendatensätze inkl. Zusatzinformation
- 5: Anfahrpunkt

- A: Anfahrpunkt definieren
- AD: Anzeigefeld für Zieladresse
- E: Editierbestätigung
- K: Anzeigefeld für Kundenname
- N: Anzeigefeld für Auftragsnummer
- M: Auswahlbereich für Zieladressen wählen
- M1: Auswahlbereich für Zieladressen
- M2: Eingabe Anfahrpunkt
- Z1, Z2, Z3: Zieladressen
- ZU-1, ZU-2, ZU-3: Zusatzinformationen

## Patentansprüche

1. Navigationssystem (4) mit Anzeigebildschirm (41) für Navigationsangaben umfassend eine Straßenkarte, ein Satellitenbild oder ein Bild aus der Vogelperspektive von der Umgebung um eine Zieladresse (Z1, Z2, Z3) herum, wobei in den Anzeigebildschirm des Navigationssystem ein Eingabemittel (43) für die Eingabe von mindestens einer Zusatzinformation (ZU1, ZU-2, ZU-3) zu mindestens einem Adressendatensatz integriert ist, wobei das Navigationssystem kabellos mit einem Computersystem (2) mit einer Datenbank (21) zur Speicherung und zur Bereitstellung (B) der Adressendatensätze für das Navigationssystem verbunden ist und das Computersystem (2) zur Einfügung (E) der Zusatzinformationen (ZU1, ZU-2, ZU-3) in die gespeicherten Adressendatensätze geeignet ist,
wobei nach Eingabe von Adressdaten einer der Zieladressen (Z1, Z2, Z3) und nachfolgender Anzeige der Umgebung der zu diesen Adressdaten zugehörigen Zieladresse (Z1) mit einem Cursor (M1) ein Auswahlbereich (M) um die Zieladresse (Z1) herum auf dem Anzeigebildschirm (41) des Navigationssystems (4) markiert werden kann, in dem markierten Bereich alle weiteren Zieladressen (Z2, Z3) dargestellt werden und mittels eines Cursors (M2) für die dargestellten Zieladressen (Z1, Z2, Z3) ein gemeinsamer Anfahrtspunkt auf dem Anzeigebildschirm (4) markiert werden kann, wobei allen Zieladressen (Z1, Z2, Z3) im markierten Bereich (M) die Geokoordinate des Anfahrpunkts (5) zugewiesen und die Geokoordinate des gemeinsamen Anfahrtspunktes (5) als Zusatzinformation in die Adressendatensätze der betreffenden Zieladressen (Z1, Z2) eingefügt wird, damit dieser Anfahrtspunkt (5) nun für spätere Kurierfahrten zu diesen Zieladressen (Z1, Z2) im Anzeigebildschirm als Anfahrtsziel angegeben wird.

2. Das Navigationssystem (4) nach Anspruch 1,
**dadurch gekennzeichnet,**
**dass** vor der Markierung eines gemeinsamen Anfahrtspunkt (5) nicht benötigte Zieladressen (Z3) mittels eines Klicks demarkiert oder entfernt werden können.

3. Das Navigationssystem (4) nach Anspruch 1 oder 2,
**dadurch gekennzeichnet,**
**dass** das Eingabemittel (43) semitransparent den Navigationsangaben im Anzeigebildschirm (41) überlagert ist.

4. Das Navigationssystem (4) nach einem der voranstehenden Ansprüche,
**dadurch gekennzeichnet,**
**dass** die Zusatzinformationen (ZU1, ZU-2, ZU-3) des Weiteren mindestens ein Element der Gruppe Synonyme und Abkürzungen der Empfänger, Verfügbarkeitszeiten, Zusatzangaben bzw. Hinweise für folgende Kurierfahrten, Änderungen des Anfahrpunktes, Anfahrtsinformationen, Kurierkennung oder Datumsangaben zu einer Adresse umfasst.

5. Das Navigationssystem (4) nach einem der voranstehenden Ansprüche,
**dadurch gekennzeichnet,**
**dass** das Navigationssystem (4) ein Anzeigeelement (45) zur Anzeige der Adressendatensätze inklusive der Zusatzinformationen (ZU1, ZU-2, ZU-3) umfasst.

6. Das Navigationssystem (4) nach Anspruch 5,
**dadurch gekennzeichnet,**
**dass** das Anzeigeelement (45) in den Anzeigebildschirm (41) des Navigationssystem (4) integriert ist.

7. Das Navigationssystem (4) nach Anspruch 6,
**dadurch gekennzeichnet,**
**dass** das Anzeigeelement (45) semitransparent den Navigationsangaben im Anzeigebildschirm (41) überlagert ist.

8. Das Navigationssystem (4) nach einem der voranstehenden Ansprüche,
**dadurch gekennzeichnet,**
**dass** das Navigationssystem (4) ein in einem Kurierfahrzeug (3) ablesbares Navigationssystem (4) ist.

9. Das Navigationssystem (4) nach einem der voranstehenden Ansprüche,
**dadurch gekennzeichnet,**
**dass** die Navigationsangaben Sprachangaben umfassen.

10. Das Navigationssystem (4) nach einem der voranstehenden Ansprüche,
**dadurch gekennzeichnet,**
**dass** das Navigationssystem (4) die Adressdatensätze selbständig in Zielkoordinaten umwandelt.

11. Das Navigationssystem (4) nach einem der voranstehenden Ansprüche,
**dadurch gekennzeichnet,**
**dass** das Eingabemittel (43) in einem separaten Fenster oder Bereich des Anzeigebildschirms (41) angeordnet ist.
